# EUROPEAN PATENT SPECIFICATION

(11) **EP 2 500 996 B1**
(45) Date of publication and mention of the grant of the patent: **30.08.2017**
(21) Application number: 12001109.3
(22) Date of filing: 20.02.2012
(51) Int. Cl.: H01R 43/24, H01R 43/18, H01R 13/405, B29C 45/14, B29C 45/16, H01R 13/74

(54) **Device connector and method of producing it**
Vorrichtungsverbinder und Verfahren zu dessen Herstellung
Connecteur de dispositif et son procédé de production

(30) Priority: 15.03.2011 JP 2011056334
(43) Date of publication of application: 19.09.2012
(73) Proprietor: Sumitomo Wiring Systems, Ltd., Yokkaichi-city, Mie 510-8503 (JP)
(72) Inventor: Matsuoka, Hiroyuki, Yokkaichi-city Mie 510-8503 (JP); Sakamoto, Shinichi, Yokkaichi-city Mie 510-8503 (JP)
(74) Representative: Müller-Boré & Partner Patentanwälte PartG mbB

(56) References cited:
- JP-A- 2009 032 500
- US-A- 6 076 258
- US-A1- 2002 016 100

## Description

US application No. US 2002/0016100 A1 discloses a connector supporting structure including a female connector, fixed to an instrumental panel, and a male connector. A cam lever is rotatably supported by the male connector hosing. On the lateral side of the male connector housing, protective cover parts are formed. When fitting the female connector to the male connector, the protective cover parts prevent the cam lever from being broken. Further, US application No. US 006076258 A2 discloses a method for insert molding, comprising assembling an insert to a holder, setting the assembled insert and holder inside a metal mold and casting resin into the metal mold.

Contrary to the prior art cited above, the present invention relates to a device connector according to claim 1 to be attached to a case of a device and to a method of producing it.

A device such as a motor is housed in a metal case in an electric vehicle or a hybrid vehicle, and a device connector such as a terminal block is attached and fixed to such a case. This device connector is connected to a wire-side connector provided on an end of a wire connected to a device such as an inverter. For example, a connector disclosed in Japanese Unexamined Patent Publication No. 2009-32500 is known as such a device connector. This includes terminal fittings, a connector housing made of synthetic resin and a metal plate made of aluminum die cast. In such a device connector, the metal plate is generally formed with an opening, through which the terminal fittings are to be inserted, and these terminal fittings are held in the connector housing while being inserted through the opening.

Although sufficient strength can be obtained since the metal plate is made of aluminum die cast in the conventional device connector, there has been a problem of high production cost. Thus, a construction capable of ensuring sufficient strength at low cost by using a metal plate formed by press-working a metal flat plate material has been studied in recent years.

Here, metal and synthetic resin have very different coefficients of thermal expansion and, hence, the connector housing shrinks more than the metal plate in a cooling process after molding. Accordingly, to suppress the shrinkage of the connector housing in the cooling process, it is thought to forcibly prevent the shrinkage of the synthetic resin from the outer peripheral edge toward the opening of the metal plate by forming the connector housing with a flange which bulge out to cover up to an outer peripheral portion of the metal plate and embossing the surface of the metal plate so that this flange does not slip relative to the metal plate.

However, even if the shrinkage of the synthetic resin located on the surface of the metal plate can be prevented by the above method, the shrinkage of the synthetic resin located in the opening cannot be prevented. Thus, a crack may be formed at a boundary between the synthetic resin in the opening and the other synthetic resin. Crack formation in the synthetic resin not only deteriorates the external appearance, but also reduces adhesion at an interface between the metal plate and the synthetic resin to form a clearance, and water may enter inside through this clearance.

The present invention was completed in view of the above situation and an object thereof is to improve production of a device connector.

This object is solved according to the invention by the features of the independent claims. Particular embodiments of the invention are subject of the dependent claims.

According to one aspect of the invention, there is provided a device connector to be attached to a case of a device, comprising: a metal plate made of a metal plate material as a base material, formed with an opening penetrating in a plate thickness direction of the plate material and to be attached and fixed to the case of the device; a connector housing made of synthetic resin and fixed to the metal plate; and at least one terminal fitting held in the connector housing while penetrating through the opening; wherein: the connector housing includes a fixing portion which at least partly covers an opening edge portion of the opening while exposing an outer peripheral edge portion of the metal plate; and the fixing portion includes a one-side sliding portion slidable relative to one surface side of the metal plate, an other-side sliding portion slidable relative to the other surface side of the metal plate and a coupling portion substantially arranged in the opening and coupling the one-side sliding portion and the other-side sliding portion.

According to the invention, the plate is a metal plate made of a metal plate material as a base material.

Accordingly, production cost are reduced or suppressed by using a metal plate while preventing crack formation in the synthetic resin.

According to a further particular embodiment of the invention, there is provided a device connector to be attached to a case of a device, comprising a metal plate made of a metal plate material as a base material, formed with an opening penetrating in a plate thickness direction of the plate material and to be attached and fixed to the case of the device; a connector housing made of synthetic resin and fixed to the metal plate by molding; and a terminal fitting held in the connector housing while penetrating through the opening; wherein the connector housing includes a fixing portion which covers an opening edge portion of the opening while exposing an outer peripheral edge portion of the metal plate; and the fixing portion includes a one-side sliding portion slidable relative to one surface side of the metal plate, an other-side sliding portion slidable relative to the other surface side of the metal plate and a coupling portion arranged in the opening and coupling the one-side sliding portion and the other-side sliding portion.

According to this construction, synthetic resin shrinks more than metal at the time of cooling. However, unlike a conventional way of preventing the shrinkage of the connector housing more than the metal plate, the one-side sliding portion of the fixing portion is caused to slide relative to the one surface side of the metal plate and the other-side sliding portion is caused to slide relative to the other surface side of the metal plate as the connector housing shrinks. Thus, no stress is produced in the synthetic resin and no crack is formed.
Further, unlike a conventional way of covering the outer peripheral edge portion of the metal plate with the synthetic resin, the outer peripheral edge portion of the metal plate is exposed. Thus, the synthetic resin located in the opening is not pulled from the opposite sides by the synthetic resin covering the surfaces of the metal plate. Further, since the one-side sliding portion and the other-side sliding portion move together via the coupling portion, there is no likelihood that the metal plate is warped due to independent sliding movements of the one-side sliding portion and the other-side sliding portion. By the above, crack formation in the synthetic resin in the opening and the synthetic resin covering the surfaces of the metal plate can be prevented and production cost of the device connector can be suppressed by using the metal plate.

According to the invention, a clearance is be formed between the coupling portion and the inner surface of the opening substantially facing the coupling portion in a state where the molded connector housing is cooled to a normal temperature.

In the particular case of integrally forming the metal plate and the connector housing, the synthetic resin shrinks more than the metal and the one-side sliding portion and the other-side sliding portion slide relative to the metal plate in the cooling process after molding, with the result that the clearance is formed between the coupling portion and the inner surface of the opening at a normal temperature. Contrary to this, the synthetic resin expands so that the coupling portion approaches the inner surface of the opening within the range of the clearance at the time of heating from a low-temperature state to a high-temperature state (state higher than a normal temperature), for example, in a thermal shock test. Therefore, there is no likelihood that the coupling portion receives stress from the inner surface of the opening to form a crack.

The present invention is preferably embodied to have the following constructions.

A seal-mounting portion made of synthetic resin at least partly may be circumferentially provided on a part of a surface of the (particularly metal) plate, which will face the case of the device, radially outward of the fixing portion; and the case of the device and the seal-mounting portion may be fixed in a sealed state via a packing (particularly via an annular packing).

Furthermore, a plurality of annular lips may be provided on a sealing surface of the packing to the seal-mounting portion.

In the case of using a metal plate made of aluminum die cast as before, it has been necessary to adopt a surface packing structure so that sealing is possible even if there are blow holes. However, with the surface packing structure, a reaction force of rubber that can provide a squeezed amount to ensure sealing is considerably large and the metal plate may not withstand such a reaction force. In this respect, the metal plate is free from blow holes and the packing provided with a plurality of annular lips can be adopted. Thus, a reaction force of rubber can be drastically reduced and, even if a metal plate weaker than the metal plate made of aluminum die cast is used, it is not necessary to increase strength such as by increasing the plate thickness, wherefore a switch to the use of the metal plate can be easily made.

Plating may be applied to the surfaces of the metal plate.

One of the one-side sliding portion and the other-side sliding portion may be formed to project more outward than the other of the one-side sliding portion and the other-side sliding portion.

The terminal fitting may be in the form of a conductive plate including a terminal main portion, a wire-side fastening portion provided at one end of the terminal main portion, particularly extending at an angle different from 0° or 180°, preferably substantially perpendicular to the terminal main portion, and a device-side fastening portion provided at another end of the terminal main portion.

The connector housing may comprise a first connecting portion to be connected to a connector and a second connecting portion being arranged in the opening and to be connected with the device.

A thick portion having a thick resin layer may be formed from a portion of the first connecting portion to a portion of the second connecting portion.

The terminal fitting may be arranged to penetrate through the opening of the plate in the thick portion.

According to another aspect of the invention, there is provided a method of producing a device connector to be attached to a case of a device, in particular according to the one aspect of the invention or a particular embodiment thereof, the method comprising:
setting at least one terminal fitting in a primary molding die, clamping the die and injecting primary molding resin to form at least one type of core; then
setting a plate made of a plate material as a base material, formed with an opening penetrating in a plate thickness direction of the plate material and the formed core at least partly arranged inside the opening in a secondary molding die, clamping the die and injecting secondary molding resin to form a connector housing made of synthetic resin and fixed to the plate, wherein the connector housing is formed to include a fixing portion which at least partly covers an opening edge portion of the opening while exposing an outer peripheral edge portion of the plate; and wherein the fixing portion is formed to include a one-side sliding portion slidable relative to one surface side of the plate, an other-side sliding portion slidable relative to the other surface side of the plate and a coupling portion substantially arranged in the opening and coupling the one-side sliding portion and the other-side sliding portion.

The present invention is preferably embodied to have the following constructions.

The secondary molding resin may shrink toward the opening in a cooling process after secondary molding, whereby the clearance is formed between an inner surface of the opening and the coupling portion.

A seal-mounting portion made of synthetic resin at least partly may be circumferentially provided on a part of a surface of the plate, which will face the case of the device, radially outward of the fixing portion.

The plate may be a metal plate and plating may be applied to the surfaces of the metal plate.

According to the above, it is possible to prevent crack formation in synthetic resin in an opening and synthetic resin covering surfaces of a (particularly metal) plate and suppress production cost of a device connector by using the (particularly metal) plate.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a perspective view of a terminal block according to a first embodiment when viewed obliquely from front,
FIG. 2 is a perspective view of the terminal block with a mounted shielding shell when viewed obliquely from behind,
FIG. 3 is a front view of the terminal block,
FIG. 4 is a plan view of the terminal block,
FIG. 5 is a section along A-A of FIG. 4,
FIG. 6 is a section along B-B of FIG. 5,
FIG. 7 is a section along C-C of FIG. 3,
FIG. 8 is a plan view of a packing,
FIG. 9 is a bottom view of the packing,
FIG. 10 is a section along D-D of FIG. 8,
FIG. 11 is a plan view of a metal plate,
FIG. 12 is a plan view of a terminal block according to a second embodiment,
FIG. 13 is a front view of the terminal block,
FIG. 14 is a section along E-E of FIG. 13, and
FIG. 15 is a plan view of the metal plate.

### <First Embodiment>

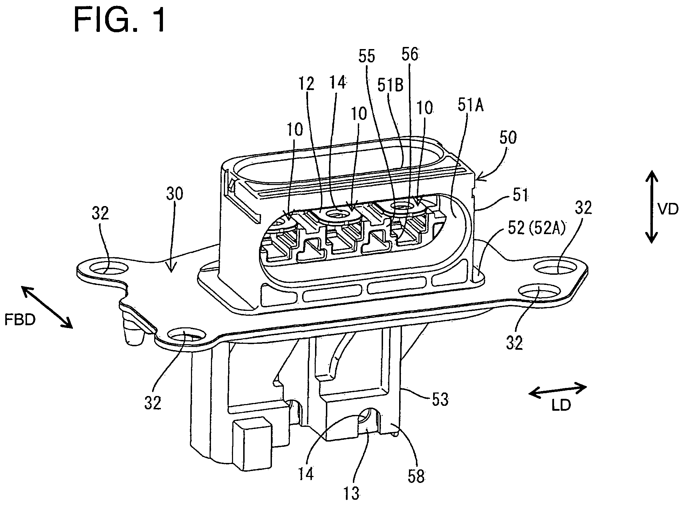

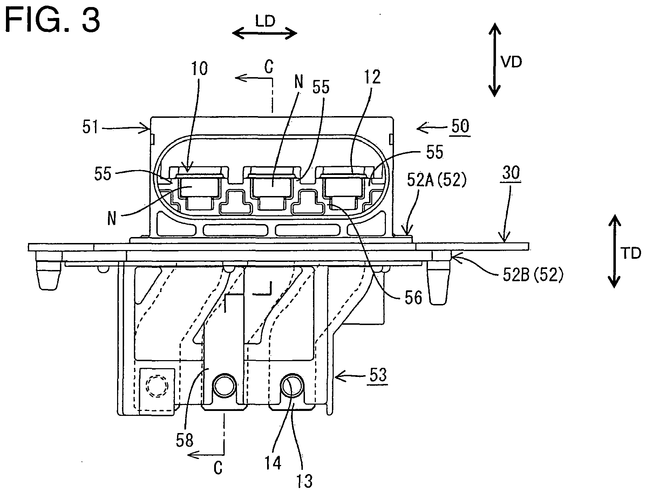

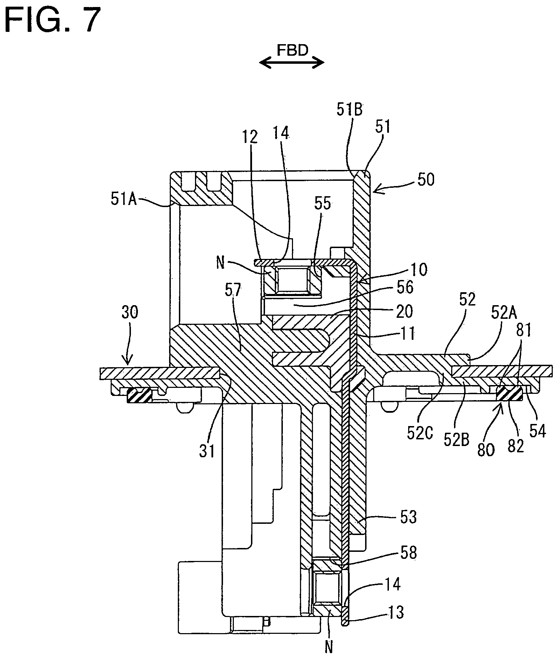

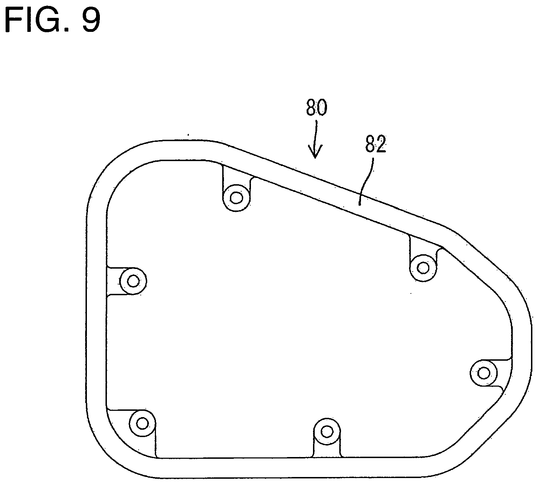

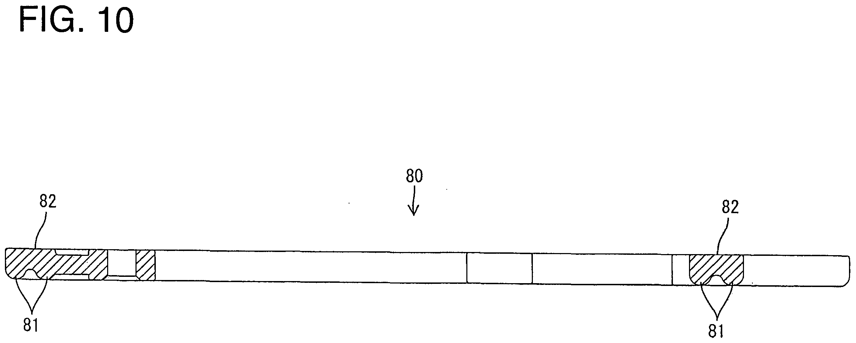

A first particular embodiment of the present invention is described with reference to FIGS. 1 to 11. In this embodiment, a terminal block to be attached to a metal motor case (not shown) housing a motor (as an example of a "device") inside is illustrated as an example of a device connector. As shown in FIG. 3, this terminal block includes a metal plate 30 to be attached and fixed to the motor case, a connector housing 50 molded to be integral to the metal plate 30, and one or more (e.g. three) conductive plates (as an example of a "terminal fitting") 10 held or housed in the connector housing 50 particularly while penetrating through the metal plate 30 in a plate thickness direction TD. Note that, in the following description, a vertical direction VD is a vertical direction in FIG. 3, a lateral direction LD is a lateral direction in FIG. 3, and forward and backward directions FBD are lateral directions in FIG. 7 with a shown left side referred to as a front side.

One or more one ends (first ends) of the conductive plates 10 are to be connected (particularly bolt-fastened) to one or more, particularly a plurality of device-side busbars (not shown) provided in or at the motor case for electrical connection. On the other hand, in a power supply device for supplying power such as an inverter, one or more, particularly a plurality of wires are arranged to extend toward the motor case and a wire-side connector (not shown) is provided at end portions of these one or more wires. One or more wire-side terminals (not shown) connected to respective wire ends are provided in this wire-side connector, and these one or more wire-side terminals are connected (particularly bolt-fastened) to the one or more other ends of the respective conductive plates 10 for electrical connection.

Each conductive plate 10 is formed by, after a conductive (particularly metal) plate with good electrical conductivity is punched or cut into a specified (predetermined or predeterminable) shape particularly by a press, performing a specified (predetermined or predeterminable) bending process on the punched or cut conductive (metal) plate as shown in FIG. 7. The conductive plate 10 includes a terminal main portion 11 constituting a main part of the conductive plate 10, a wire-side fastening portion 12 extending laterally or forward from the lateral or upper end of the terminal main portion 11, and a device-side fastening portion 13 provided at a lower end portion of the terminal main portion 11. The terminal main portion 11 particularly is formed to be longer than the wire-side fastening portion 12.

As shown in FIG. 3, the plurality of (e.g. three) conductive plates 10 particularly are arranged substantially side by side in the lateral direction LD. Further, the terminal main portions 11 particularly are slightly cranked in the lateral direction LD at intermediate positions as shown by broken line in FIG. 3. The wire-side fastening portions 12 and the device-side fastening portions 13 are each formed with a bolt insertion hole 14 through which a fastening bolt (not shown) at least partly is insertable.

The terminal main portion 11 of the conductive plate 10 (particularly arranged in the center or intermediate position out of the three conductive plates 10) substantially extends in the vertical direction VD and/or is substantially flat as shown in FIG. 7. The lateral terminal main portions 11, 11 (particularly of the both conductive plates located at the opposite left and right sides out of the three conductive plates 10) include each a facing portion bent forward to face the wire-side fastening portion 12 at an intermediate part (particularly a substantially vertically central part) of the terminal main portion 11 although not shown, and the front end of this facing portion is bent downward particularly substantially at the same position as the front end of the wire-side fastening portion 12.

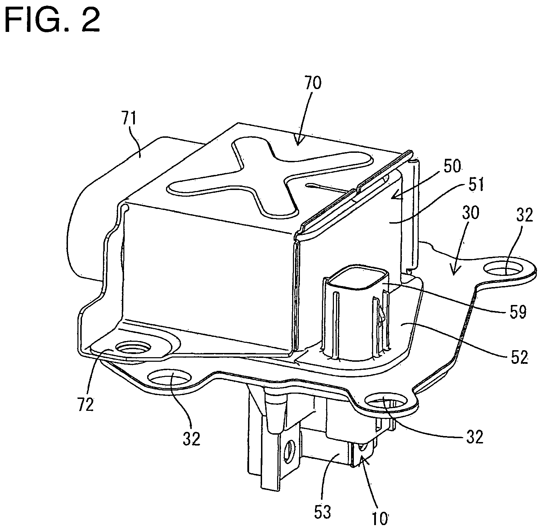

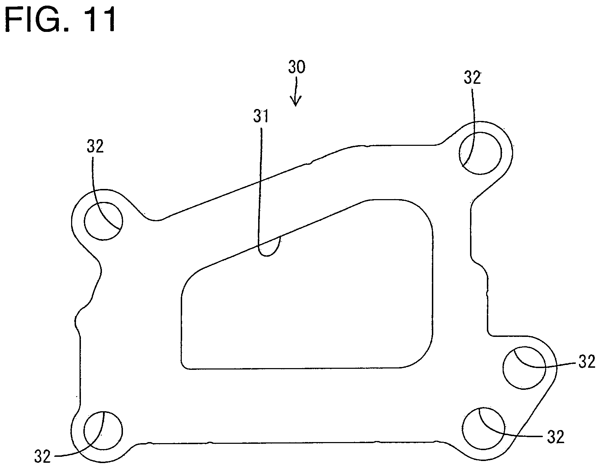

As shown in FIG. 11, the metal plate 30 particularly is made of a metal flat plate material as a base material and includes an opening 31 formed to penetrate in a plate thickness direction TD of the plate material. As shown in FIG. 2, the connector housing 50 particularly includes a small connector portion 59 molded to be integral to the metal plate 30 and arranged to penetrate through the opening 31 in the vertical direction VD, a wire-side fitting portion 51 arranged above (one side) the metal plate 30, a (particularly substantially plate-like) flange 52 arranged at or corresponding to the height position of the metal plate 30 and bulging out sideways (in a plane direction of the metal plate 30), and a device-side fitting portion 53 arranged below (other side) the metal plate 30. Note that the flange 52 particularly corresponds to a "fixing portion".

As shown in FIG. 1, the wire-side fitting portion 51 particularly substantially is in the form of a box long in the lateral direction and includes a front end opening 51A (as a particular first opening) which is open in one direction (e.g. forward) and an upper end opening 51B (as a particular second opening) which is open in another direction (e.g. upward). The wire-side connector is at least partly fittable or insertable into the wire-side fitting portion 51 through the front end opening 51A of the wire-side fitting portion 51.

As shown in FIG. 3, one or more (e.g. three) nut accommodating portions 55 are formed (particularly substantially side by side in the lateral direction LD) in the wire-side fitting portion 51. These one or more (e.g. three) nut accommodating portions 55 are respectively open to two sides such as forward and upward. Further, all the (three) nut accommodating portion(s) 55 is/are arranged to substantially face (particularly forward) through the front or first end opening 51A and substantially face (particularly upward) through the upper or second end opening 51B. One or more nuts N press-fitted through the front end opening 51A from front particularly are so accommodated in the nut accommodating portions 55 that the axis lines of the nuts N are aligned with the vertical direction VD.

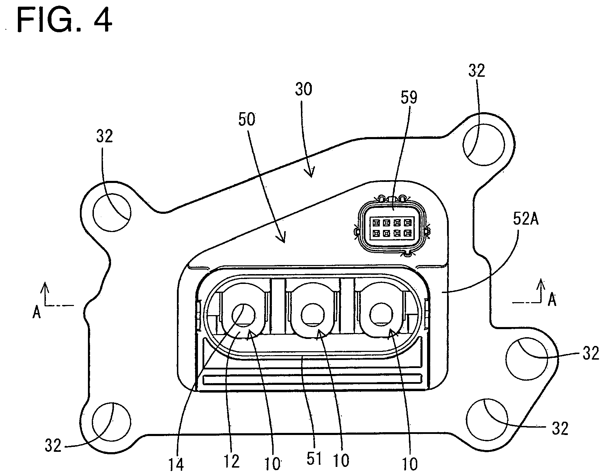

The wire-side fastening portions 12 of the conductive plates 10 are arranged to close the upper end openings of the nut accommodating portions 55 as shown in FIGS. 3 and 4. Further, as shown in FIG. 7, each conductive plate 10 is arranged to penetrate through the opening 31 in the vertical direction VD and so held in the connector housing 50 that the wire-side fastening portion 12 is substantially arranged around the bolt insertion hole 14 and at least partly exposed forward and/or upward in the wire-side fitting portion 51 and, on the other hand, the device-side fastening portion 13 is substantially arranged around the bolt insertion hole 14 and at least partly exposed backward at the lower end portion of the device-side fitting portion 53. Each wire-side fastening portion 12 is at least partly exposed to the outside through the upper end opening 51B of the wire-side fitting portion 51. That is, the upper end opening 51B of the wire-side fitting portion 51 particularly is or may be used as a service hole used to at least partly insert a tool or the like for a bolt fastening operation. The wire-side terminal is substantially placed on the wire-side fastening portion 12 and the tool is inserted inside through the upper end opening 51B to threadably engage the fastening bolt with the nut N, whereby the conductive plate 10 and the wire-side terminal are electrically connected. Note that a service cover (not shown) is mounted on or to the upper end opening 51B of the wire-side fitting portion 51 after bolt fastening, thereby closing the upper end opening 51B.

An escaping recess 56 for allowing a leading end part of the fastening bolt penetrating through the nut N to escape when the fastening bolt is fastened to the nut N is provided below each nut accommodating portion 55. The escaping recess 56 particularly is formed to be narrower than the nut accommodating portion 55 in the lateral direction LD and integrally or unitarily formed with the nut accommodating portion 55 by a slide die.

As shown in FIG. 2, a metal shielding shell 70 at least partly covering the wire-side fitting portion 51 except the rear surface is mounted on the wire-side fitting portion 51. This shielding shell 70 is formed by, after a conductive (particularly metal) plate with good electrical conductivity is punched or cut into a specified (predetermined or predeterminable) shape by a press, performing a specified (predetermined or predeterminable) bending process on the punched or cut conductive (metal) plate. The shielding shell 70 includes a (particularly braided) fixing portion 71 having a laterally long cylindrical shape, and a fixing piece 72 for fixing the shielding shell 70 to the metal plate 30 and electrically connecting the shielding shell 70 and the motor case by being fastened to the motor case together with the metal plate 30. Specifically, the braided fixing portion 71 particularly is such that a braided wire provided to collectively cover shielded conductive paths of the wire-side connector is connected to a connection portion, particularly crimped against a crimp ring as the connection portion.

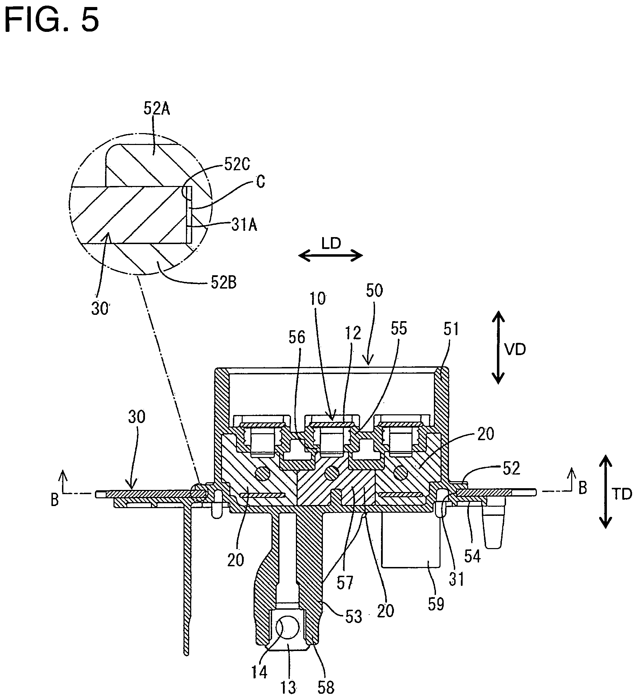

The flange 52 is formed to at least partly cover an opening edge portion of the opening 31 over at least part of the circumference, particularly the substantially entire circumference, while exposing an outer peripheral edge portion of the metal plate 30. This flange 52 is composed of or comprises a wire-side flange 52A which at least partly covers a side of the wire-side fitting portion 51 of the opening edge portion of the opening 31, a device-side flange 52B which at least partly covers a side of the device-side fitting portion 52 thereof, and a coupling portion 52C (particularly arranged substantially along the inner circumferential surface of the opening 31 and) coupling the both flanges 52A, 52B. The wire-side flange 52A and the device-side flange 52B sandwich the metal plate 30 in the plate thickness direction TD, and the coupling portion 52C particularly is held in contact with the inner peripheral surface of the opening 31, whereby the connector housing 50 is fixed or made integral to the metal plate 30. Specifically, as is clear from FIG. 4, the wire-side flange 52A of the flange 52 particularly is shaped to extend in the lateral direction LD and/or backward direction. As is clear from FIGS. 5 and 7, the device-side flange 52B is formed to (particularly substantially entirely) cover a surface of the metal plate 30 at the side of the device-side fitting portion 53. Note that the wire-side flange 52A particularly corresponds to a "one-side sliding portion", and the device-side flange 52B particularly corresponds to an "other-side sliding portion".

The opening 31 particularly has a substantially trapezoidal shape. Further, the facing portions of the conductive plates 10 at the lateral (left and/or right) side(s) and/or the terminal main portion 11 of the (particularly central) conductive plate 10 are arranged in the opening 31. On the other hand, a thick portion 57 having a thick resin layer is formed particularly from a lower end portion of the wire-side fitting portion 51 to an upper end portion of the device-side fitting portion 53 as shown in FIG. 7. That is, the one or more (e.g. three) conductive plates 10 having a complicated shape are arranged to penetrate through the opening 31 of the metal plate 30 in this thick portion 57.

Further, one or more, particularly a plurality of mounting holes 32 are formed in the outer peripheral edge portion of the metal plate 30. One or more fixing bolts or rivets (not shown) are to be at least partly inserted through these mounting holes 32 and fastened to the motor case, whereby the terminal block can be attached and fixed to the motor case.

The device-side fitting portion 53 is housed into the motor case when the terminal block is fixed to the motor case. Further, as shown in FIG. 1, one or more (e.g. three) nut accommodating portions 58 are formed in the device-side fitting portion 53. Specifically, out of these nut accommodating portions 58, the nut accommodating portion 58 located in the center or at an intermediate position is arranged behind the other nut accommodating portions 58. In the nut accommodating portions 58 of the device-side fitting portion 53, the fastening bolts are threadably engaged with respective nuts N to electrically connect the conductive plates 10 and the device-side busbars similar to the nut accommodating portions 55 of the wire-side fitting portion 51. In this way, the wire-side terminals and the device-side busbars are electrically connected using the conductive plates 10 as intermediate terminals.

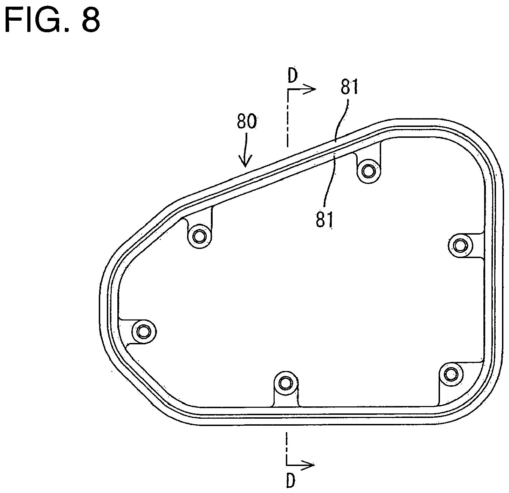

As shown in FIG. 7, the device-side flange 52B of the flange 52 is formed to bulge out sideways or laterally (along a direction parallel to a plane of the metal plate 30) more than the wire-side flange 52A. A packing mounting groove 54 into which a (particularly substantially ring-shaped) packing 80 is to be mounted substantially is circumferentially formed in a part (corresponding to a particular "seal-mounting portion") of the device-side flange 52B bulging out from the wire-side flange 52A. The packing 80 is made of a resilient material such as rubber and includes one or more (e.g. two) annular lips 81 on a sealing surface to the packing mounting groove 54 as shown in FIGS. 8 to 10. A surface of the packing 80 opposite to the one with the (particularly both) annular lip(s) 81 serves as a surface sealing portion 82 to be surface sealed to the motor case. The motor case and the device-side flange 52B are fixed in a sealed manner via the packing 80 by fixing (particularly bolt-fastening) the metal plate 30 to the motor case. Since a sealing structure for the device-side flange 52B is formed by the (both) annular lip(s) 81 in this way, a pressing force required to press the annular lips 81 for a sealing purpose can be small. Accordingly, it is not necessary to ensure strength particularly by increasing the thickness of the metal plate 30 and sufficient sealing performance can be obtained with a smaller pressing force than in the case of using a metal plate made of aluminum die cast.

The flange 52 in this embodiment is slidable relative to the metal plate 30. Specifically, the wire-side flange 52A is slidable relative to the upper surface of the metal plate 30, and the device-side flange 52B is slidable relative to the lower surface of the metal plate 30. Further, the wire-side flange 52A and the device-side flange 52B are coupled to each other by the coupling portion 52C. This coupling portion 52C is arranged to substantially face an inner surface 31A of the opening 31.

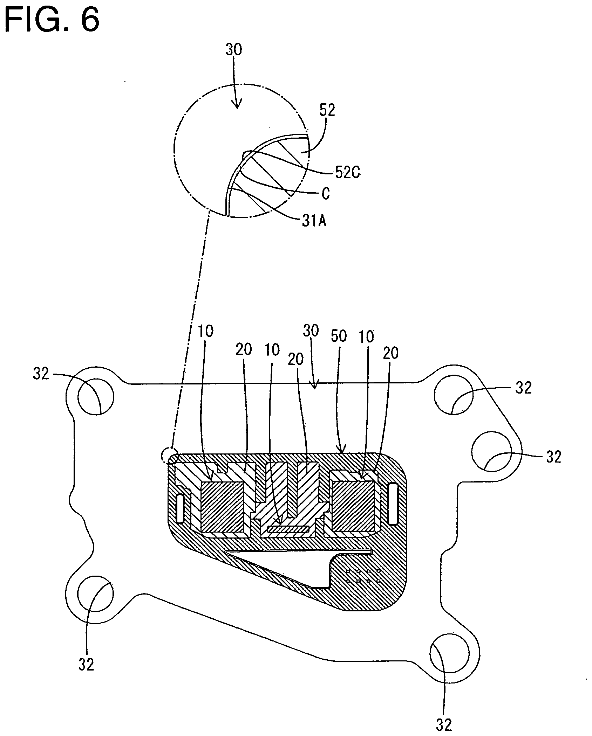

Specifically, as shown in partial enlarged views of FIGS. 5 and 6, a clearance C particularly is set between the coupling portion 52C and the inner surface 31A of the opening 31. This clearance C particularly is formed since synthetic resin shrinks more than metal in a cooling process after molding when the metal plate 30 and the connector housing 50 are integrally formed. That is, the clearance C is not formed when molten resin is injected, but is formed when synthetic resin in the opening 31 shrinks while the wire-side flange 52A, the device-side flange 52B and the coupling portion 52C slip toward the opening 31.

Although plating particularly is applied to the surfaces of the metal plate 30 in this embodiment, the metal plate material as a base material may be used as it is without applying plating. Further, no process such as embossing is performed on the metal plate 30 except at the opening 31. Thus, the synthetic resin can slide on the surfaces of the metal plate 30 by expansion by heating or shrinkage by cooling.

Next, functions of this embodiment constructed as described above are described. First, one or more conductive plates 10 (e.g. three types of conductive plates 10) are set in a primary molding die (not shown), the die is clamped and primary molding resin is injected to form one or more (e.g. three) types of cores 20. Subsequently, these one or more (e.g. three) types of cores 20 are set in a secondary molding die (not shown), the die is clamped and secondary molding resin is injected to form the terminal block. Here, the secondary molding resin particularly shrinks toward the opening 31 in a cooling process after secondary molding, whereby the clearance C is formed between the inner surface 31A of the opening 31 and the coupling portion 52C. Since the secondary molding resin shrinks while slipping on the surfaces of the metal plate 30 in this cooling process, there is no likelihood that stress is accumulated in the secondary molding resin to form a crack.

Next, a thermal shock test conducted is described. The thermal shock test is a cold shock test which gives a thermal shock to the terminal block by repeating a low-temperature state (state lower than a normal temperature) and a high-temperature state (state higher than a normal temperature). When a transition is made from the low-temperature state to the high-temperature state, synthetic resin expands, whereby the wire-side flange 52A slides on the upper surface of the metal plate 30 and the device-side flange 52B slides on the lower surface of the metal plate 30. Although this causes the coupling portion 52C to approach the inner surface 31A of the opening 31 to decrease or fill up the clearance C, a situation is not reached where the coupling portion 52C receives stress from the inner surface 31A of the opening 31 to form a crack.

Contrary to this, when a transition is made from the high-temperature state to the low-temperature state, the synthetic resin shrinks, whereby the wire-side flange 52A slides on the upper surface of the metal plate 30 and the device-side flange 52B slides on the lower surface of the metal plate 30. Further, the coupling portion 52C moves toward the opening 31 to form or increase the clearance C to the inner surface 31A of the opening 31. Note that the coupling portion 52C couples the wire-side flange 52A and the device-side flange 52B so that the both flanges 52A, 52B particularly slide in tandem or at the same time. This prevents a situation where a sliding distance of the wire-side flange 52A and that of the device-side flange 52B differ and the metal plate 30 is warped.

As described above, since the flange 52 is slidable relative to the metal plate 30 in this embodiment, crack formation in the synthetic resin can be prevented. Further, since the wire-side flange 52A and the device-side flange 52B particularly are coupled by the coupling portion 52C, the both flanges 52A, 52B can slide in tandem and the warping of the metal plate 30 and the like can be prevented. Further, since the clearance C particularly is provided between the inner surface 31A of the opening 31 and the coupling portion 52C in a normal-temperature state, crack formation due to stress received by the coupling portion 52C from the inner surface 31A of the opening 31 in the high-temperature state of the thermal shock test can be prevented. Further, the one or more annular lips 81 of the packing 80 are pressed by the device-side flange 52B and the metal plate 30 in the packing mounting groove 54, wherefore the annular lips 81 can be pressed with a small pressing force and sufficient sealing performance can be obtained.

Accordingly, to suppress or reduce production cost by using a metal plate while preventing crack formation in synthetic resin, a terminal block is provided to be attached to case of a device such as a motor case. The terminal block includes a metal plate 30 made of a metal plate material as a base material, formed with an opening 31 penetrating in a plate thickness direction TD of the plate material and to be attached and fixed to the motor case; a connector housing 50 made of synthetic resin and fixed to the metal plate 30; and conductive plates 10 held in the connector housing 50 while penetrating through the opening 30. The connector housing 50 includes a flange 52 which covers an opening edge portion of the opening 31 while exposing an outer peripheral edge portion of the metal plate 30. The flange 52 includes a wire-side flange 52A slidable or movable relative to the upper surface of the metal plate 30, a device-side flange 52B slidable or movable relative to the lower surface of the metal plate 30 and a coupling portion 52C arranged in the opening 31 and at least partly coupling the both flanges 52A, 52B.

### <Second Embodiment>

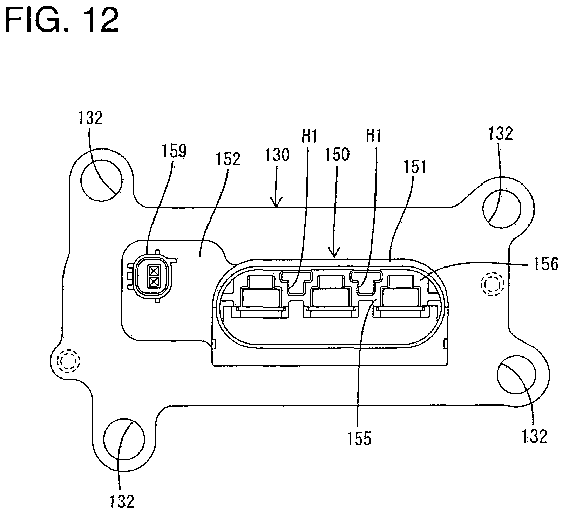

Next, a second particular embodiment of the present invention is described with reference to FIGS. 12 to 15. Constructions of this embodiment corresponding to the first embodiment are identified by reference numerals which are the reference numerals of the first embodiment plus 100 and constructions, functions and effects similar to those of the first embodiment are not repeatedly described. The following description is centered on constructions different from the first embodiment.

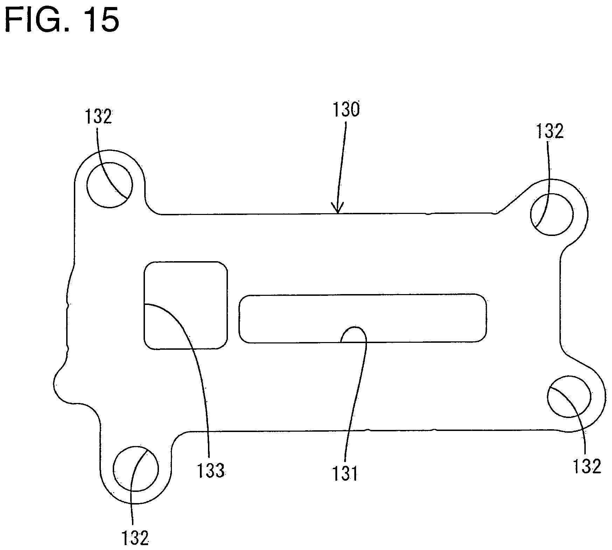

As shown in FIGS. 12 and 15, a small opening 133 through which only a small connector portion 159 at least partly is vertically inserted is formed in a metal plate 130 of this embodiment in addition to an opening 131 as openings through which a connector housing 150 is vertically inserted. That is, a wire-side fitting portion 151 and a device-side fitting portion 153 are arranged in the opening 131 and the small connector portion 159 is arranged in the small opening 133. The metal plate 130 particularly has a somewhat laterally long rectangular shape and mounting holes 132 are formed at four corners thereof.

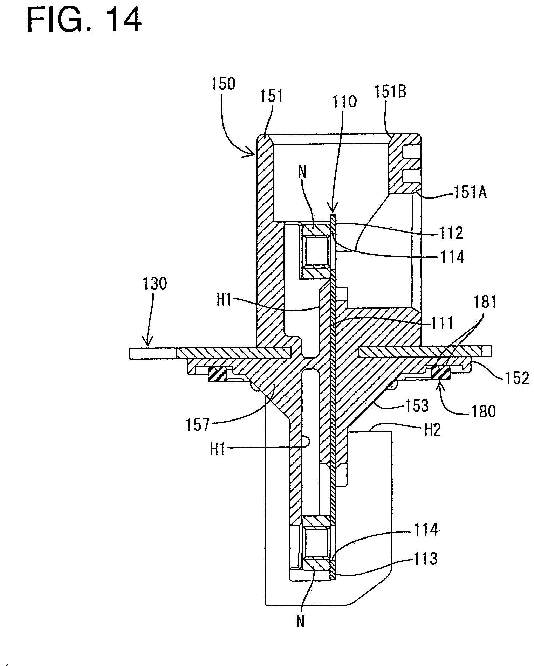

As is clear from FIG. 14, the connector housing 150 is not formed in two processes, i.e. primary molding and secondary molding unlike in the first embodiment, and is formed in one process by setting conductive plates 110 in a lower die of a molding die, clamping the molding die and injecting molten resin. The vertically extending conductive plates 110 are insert-molded in the connector housing 150, and wire-side fastening portions 112 vertically extend in flush with terminal main portions 111.

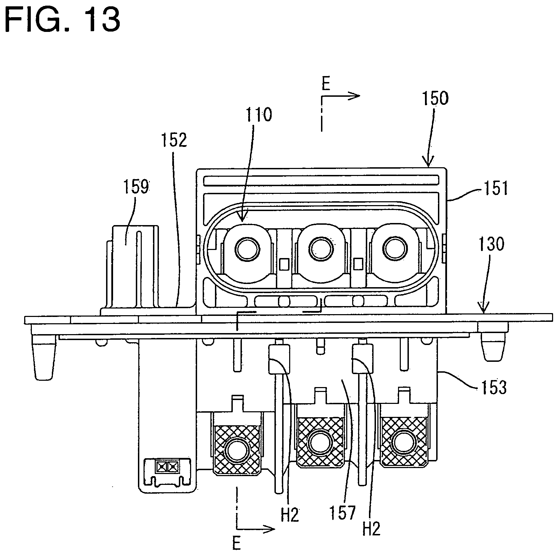

As shown in FIG. 14, a thick portion 157 particularly is formed with one or more mold removal holes H1 which communicate with escaping recesses 156 and vertically extend. A pair of mold removal holes H1 are provided in correspondence with upper and lower escaping recesses 156. These mold removal holes H1 prevent the formation of voids in the thick portion 157. Further, as shown in FIG. 13, the thick portion 157 is formed with one or more, particularly a plurality of mold removal holes H2 with an open front side. The formation of voids in the thick portion 157 is also prevented by these mold removal holes H2.

The small connector portion 159 and the wire-side fitting portion 151, and the small connector portion 159 and the device-side fitting portion 153 are respectively coupled to each other via a common flange 152. As in the first embodiment, the flange 152 is slidable relative to the metal plate 130. Accordingly, crack formation caused by a temperature variation in a cooling process after the molding of the connector housing 150 and a thermal shock test can be prevented.

### <Other Embodiments>

The present invention is not limited to the above described and illustrated embodiments. For example, the following embodiments are also included in the technical scope of the present invention.
(1) Although the flange is integrally formed with the metal plate in the above embodiments, the flange may be formed separately from the metal plate and may be mounted later according to the present invention. That is, the one-side sliding portion and the other-side sliding portion may be arranged to sandwich the metal plate from the opposite sides and integrally assembled by a bolt.
(2) Although a clearance is provided between the coupling portion and the inner surface of the opening in the above embodiments, no clearance may be provided according to the present invention, for example, such as when the opening is small and no crack is formed even if the synthetic resin in the opening expands and stress is received from the inner surface of the opening.
(3) Although the packing formed with the annular lips on one surface is used in the above embodiments, a packing formed with surface sealing portions on both surfaces may be used according to the present invention.
(4) Although the flange 52 at least partly covers the opening edge portion of the opening 31 over the entire circumference in the above embodiment, at least one flange (fixing portion) may be so formed as to cover a part of the opening edge portion of the opening 31 according to the present invention. This leads to a cost reduction by reducing the amount of the resin and/or reduces the influence of thermal shrinkage by reducing the amount of the resin covering the opening edge portion of the opening, thereby reducing friction produced between the metal plate and the fixing portion and making the fixing portion more easily slidable relative to the metal plate.
(5) Although the device-side flange 52B is formed to be longer (or project more outward) than the wire-side flange 52A in the above embodiment, the device-side flange and the wire-side flange may be formed to have the substantially same length or the device-side flange may be formed to be shorter than the wire-side flange according to the present invention.
(6) Although the packing mounting groove 54 is integrally or unitarily formed in the device-side flange 52B in the above embodiment, a seal-mounting portion may be formed separately from the device-side flange and the packing mounting groove may be formed in this seal-mounting portion. That is, the seal-mounting portion may be formed in conformity with the mounting position of the packing.
(7) Although in the above embodiments the plate 30 is a metal plate being made of metal plate material, it should be understood that the plate 30 may be made of any other material such as a composite material, a layered material or the like.

### LIST OF REFERENCE NUMERALS

- 10,110: conductive plate (terminal fitting)
- 30,130: metal plate (plate)
- 31, 131: opening
- 31A. 131A: inner surface
- 50, 150: connector housing
- 51, 151: wire-side fitting portion (first connecting portion)
- 52, 152: flange (fixing portion)
- 52A, 152A: wire-side flange (one-side sliding portion)
- 52B, 152B: device-side flange (other-side sliding portion)
- 52C, 152C: coupling portion
- 53, 153: device-side fitting portion (second connecting portion)
- 54: seal-mounting portion
- 57, 157: thick portion
- 80, 180: packing
- 81,181: annular lip
- 131: small opening
- C: clearance

## Claims

1. A device connector to be attached to a case of a device, comprising:
a plate (30; 130) made of a plate material as a base material, formed with an opening (31; 131) penetrating in a plate thickness direction (TD) of the plate material and to be attached and fixed to the case of the device;
a connector housing (50; 150) made of synthetic resin and fixed to the plate (30; 130), wherein the connector housing (50; 150) is fixed to the plate (30; 130) by molding; and
at least one terminal fitting (10; 110) held in the connector housing (50; 150) while penetrating through the opening (31; 131);
wherein:
the connector housing (50; 150) includes a fixing portion (52; 152) which at least partly covers an opening edge portion of the opening (31; 131) while exposing an outer peripheral edge portion of the plate (30; 130); and
the fixing portion (52; 152) includes a one-side sliding portion (52A; 152A) slidable relative to one surface side of the plate (30; 130), an other-side sliding portion (52B; 152B) slidable relative to the other surface side of the plate (30; 130) and a coupling portion (52C; 152C) substantially arranged in the opening (31; 131) and coupling the one-side sliding portion (52A; 152A) and the other-side sliding portion (52B; 152B) **characterized in that**:
the plate (30; 130) is a metal plate (30; 130) made of a metal plate material as a base material; and **in that**:
a clearance (C) is formed between the coupling portion (52C; 152C) and the inner surface of the opening (31; 131) facing the coupling portion (52C; 152C) in a state where the molded connector housing (50; 150) is cooled to a normal temperature.

2. A device connector according to claim 1, wherein a seal-mounting portion (54) made of synthetic resin at least partly is circumferentially provided on a part of a surface of the plate (30; 130), which will face the case of the device, radially outward of the fixing portion (52; 152); and
the case of the device and the seal-mounting portion (54) are fixed in a sealed state via a packing (80; 180).

3. A device connector according to claim 2, wherein a plurality of annular lips (81; 181) are provided on a sealing surface of the packing (80; 180) to the seal-mounting portion (54).

4. A device connector according to any one of the preceding claims, wherein plating is applied to the surfaces of the metal plate (30; 130).

5. A device connector according to any one of the preceding claims, wherein one of the one-side sliding portion (52A; 152A) and the other-side sliding portion (52B; 152B) is formed to project more outward than the other of the one-side sliding portion (52A; 152A) and the other-side sliding portion (52B; 152B).

6. A device connector according to any one of the preceding claims, wherein the terminal fitting (10; 110) is in the form of a conductive plate (10; 110) including a terminal main portion (11), a wire-side fastening portion (12) provided at one end of the terminal main portion (11), particularly extending at an angle different from 0° or 180°, preferably substantially perpendicular to the terminal main portion (11), and a device-side fastening portion (13) provided at another end of the terminal main portion (11).

7. A device connector according to any one of the preceding claims, wherein the connector housing (50; 150) comprises a first connecting portion (51; 151) to be connected to a connector and a second connecting portion (53; 153) being arranged in the opening (31; 131) and to be connected with the device .

8. A device connector according to claim 7, wherein a thick portion (57; 157) having a thick resin layer is formed from a portion of the first connecting portion (51; 151) to a portion of the second connecting portion (53; 153).

9. A device connector according to claim 8, wherein the terminal fitting (10; 110) is arranged to penetrate through the opening (31; 131) of the plate (30; 130) in the thick portion (57; 157).

10. A method of producing a device connector to be attached to a case of a device, comprising:
setting at least one terminal fitting (10; 110) in a primary molding die,
clamping the die and
injecting primary molding resin to form at least one type of core (20);
then
setting a plate (30; 130) made of a plate material as a base material, formed with an opening (31; 131) penetrating in a plate thickness direction (TD) of the plate material and the formed core (20) at least partly arranged inside the opening (31; 131) in a secondary molding die,
clamping the die and
injecting secondary molding resin to form a connector housing (50; 150) made of synthetic resin and fixed to the plate (30; 130), wherein the connector housing (50; 150) is formed to include a fixing portion (52; 152) which at least partly covers an opening edge portion of the opening (31; 131) while exposing an outer peripheral edge portion of the plate (30; 130); and wherein the fixing portion (52; 152) is formed to include a one-side sliding portion (52A; 152A) slidable relative to one surface side of the plate (30; 130), an other-side sliding portion (52B; 152B) slidable relative to the other surface side of the plate (30; 130) and a coupling portion (52C; 152C) substantially arranged in the opening (31; 131) and coupling the one-side sliding portion (52A; 152A) and the other-side sliding portion (52B; 152B).

11. A method according to claim 10, wherein the secondary molding resin shrinks toward the opening (31; 131) in a cooling process after secondary molding, whereby the clearance (C) is formed between an inner surface (31A; 131A) of the opening (31; 131) and the coupling portion (52C; 152C).

12. A method according to claim 10 or 11, wherein a seal-mounting portion (54) made of synthetic resin at least partly is circumferentially provided on a part of a surface of the plate (30; 130), which will face the case of the device, radially outward of the fixing portion (52; 152).

13. A method according to any one of the preceding claims 10 to 12, wherein the plate (30; 130) is a metal plate (30; 130) and plating is applied to the surfaces of the metal plate (30; 130).

## Patentansprüche

1. Ein Vorrichtungsverbinder, der an einem Vorrichtungsgehäuse anzubringen ist, und der Folgendes umfasst:
eine Platte (30; 130), die aus einem Plattenmaterial als Basismaterial besteht und die mit einer in eine Richtung der Plattendicke (TD) des Plattenmaterials eindringenden Öffnung (31; 131) gebildet wird, und die an das Gehäuse der Vorrichtung anzubringen und zu befestigen ist;
ein Verbindergehäuse (50; 150), das aus Kunstharz hergestellt wird und an der Platte (30; 130) befestigt ist, wobei das Verbindergehäuse (50; 150) durch Formen an der Platte (30; 130) befestigt ist; und
mindestens ein Anschlusspassstück (10; 110), das beim Eindringen durch die Öffnung (31; 131) im Verbindergehäuse (50; 150) gehalten wird;
wobei:
das Verbindergehäuse (50; 150) einen Befestigungsabschnitt (52; 152) beinhaltet, der zumindest teilweise einen Öffnungsraridbereich der Öffnung (31; 131) abdeckt, während er einen äußeren Umfangs-Randbereich der Platte (30; 130) freilässt; und wobei
der Befestigungsabschnitt (52; 152) Folgendes beinhaltet: einen einseitigen Gleitabschnitt (52A; 152A), der in Bezug auf eine Oberflächenseite der Platte (30; 130) gleitfähig ist, und einen anders-seitigen Gleitabschnitt (52B; 152B) beinhaltet, der in Bezug auf die andere Oberflächenseite der Platte (30; 130) gleitfähig ist, und einen Kopplungsabschnitt (52C; 152C), der im Wesentlichen in der Öffnung (31; 131) angeordnet ist und den einseitigen Gleitabschnitt (52A; 152A) und den anders-seitigen Gleitabschnitt (52B; 152B) koppelt, **dadurch gekennzeichnet, dass**:
die Platte (30; 130) eine Metallplatte (30; 130) ist, die aus einem Metallplatten-Material als Basismaterial besteht, und dadurch, dass:
ein Zwischenraum (C) zwischen dem Kopplungsabschnitt (52C; 152C) und der inneren Fläche der Öffnung (31; 131), die dem Kopplungsabschnitt (52C; 152C) zugewandt ist, in einem Zustand gebildet wird, in dem das geformte Verbindergehäuse (50; 150) auf eine normale Temperatur gekühlt wird.

2. Ein Vorrichtungsverbinder nach Anspruch 1, wobei ein Dichtungsmontageabschnitt (54), der zumindest teilweise aus Kunstharz besteht, im Umfangsbereich auf einem Teil einer Fläche der Platte (30; 130) bereitgestellt wird, der dem Gehäuse der Vorrichtung zugewandt sein wird, radial außerhalb des Befestigungsabschnitts (52; 152); und wobei
das Gehäuse der Vorrichtung und der Dichtungsmontageabschnitt (54) in einem versiegelten Zustand mittels einer Dichtung (*packing*) (80; 180) befestigt werden.

3. Ein Vorrichtungsverbinder nach Anspruch 2, wobei eine Vielzahl an ringförmigen Lippen (81; 181) auf einer Abdichtfläche der Dichtung (80; 180) für den Dichtungsmontageabschnitt (54) bereitgestellt werden.

4. Ein Vorrichtungsverbinder nach irgendeinem der vorhergehenden Ansprüche, wobei eine Plattierung auf die Oberflächen der Metallplatte (30; 130) aufgebracht wird.

5. Ein Vorrichtungsverbinder nach irgendeinem der vorhergehenden Ansprüche, wobei einer unter den Folgenden: der einseitige Gleitabschnitt (52A; 152A) und der anders-seitige Gleitabschnitt (52B; 152B) gebildet wird, um weiter vorzustehen als der andere unter den Folgenden: der einseitige Gleitabschnitt (52A; 152A) und der anders-seitige Gleitabschnitt (52B; 152B).

6. Ein Vorrichtungsverbinder nach irgendeinem der vorhergehenden Ansprüche, wobei das Anschlusspassstück (10; 110) die Form einer leitfähigen Platte (10; 110) aufweist, das Folgendes beinhaltet: einen Anschlusshauptabschnitt (11), einen drahtseitigen Befestigungsabschnitt (12), der an einem Ende des Anschlusshauptabschnitts (11) bereitgestellt wird und der insbesondere unter einem von 0° und 180° unterschiedlichen Winkel verläuft und der vorzugsweise im Wesentlichen senkrecht zum Anschlusshauptabschnitt (11) ist, und einen vorrichtungsseitigen Befestigungsabschnitt (13), der an einem anderen Ende des Anschlusshauptabschnitts (11) bereitgestellt wird.

7. Ein Vorrichtungsverbinder nach irgendeinem der vorhergehenden Ansprüche, wobei das Verbindergehäuse (50; 150) einen ersten Verbindungsabschnitt (51; 151) umfasst, der mit einem Verbinder zu verbinden ist, und einen zweiten Verbindungsabschnitt (53; 153), der in der Öffnung (31; 131) angeordnet ist und mit der Vorrichtung zu verbinden ist.

8. Ein Vorrichtungsverbinder nach Anspruch 7, wobei ein dicker Abschnitt (57; 157), der eine dicke Kunstharzschicht aufweist, ausgehend von einem Abschnitt des ersten Verbindungsabschnitts (51; 151) zu einem Abschnitt des zweiten Verbindungsabschnitts (53; 153) gebildet wird.

9. Ein Vorrichtungsverbinder nach Anspruch 8, wobei das Anschlusspassstück (10; 110) angeordnet ist, um durch die Öffnung (31; 131) der Platte (30; 130) in den dicken Abschnitt (57; 157) einzudringen.

10. Ein Verfahren zur Herstellung eines Vorrichtungsverbinders, der an einem Vorrichtungsgehäuse anzubringen ist, wobei das Verfahren Folgendes umfasst:
setzen von mindestens einem Anschlusspassstück (10; 110) in eine primäre Gießform,
einspannen der Gießform und
einspritzen von primärem Gießharz, um zumindest einen Kerntyp (20) zu bilden;
dann
setzen einer aus einem Plattenmaterial als Basismaterial bestehenden Platte (30; 130), die mit einer in eine Richtung der Plattendicke (TD) des Plattenmaterials eindringenden Öffnung (31; 131) gebildet wird, und den zumindest teilweise in der Öffnung (31; 131) angeordneten, gebildeten Kern (20) in eine sekundäre Gießform,
einspannen der Gießform und
einspritzen von sekundärem Gießharz, um ein aus Kunstharz bestehendes und an der Platte (30; 130) befestigtes Verbindergehäuse (50; 150) zu bilden, wobei das Verbindergehäuse (50; 150) gebildet wird, um einen Befestigungsabschnitt (52; 152) zu beinhalten, der zumindest teilweise einen Öffnungsrandbereich der Öffnung (31; 131) abdeckt, während er einen äußeren Umfangs-Randbereich der Platte (30; 130) freilässt; und wobei der Befestigungsabschnitt (52; 152) gebildet wird, um Folgendes zu beinhalten: einen einseitigen Gleitabschnitt (52A; 152A), der in Bezug auf eine Oberflächenseite der Platte (30; 130) gleitfähig ist, und einen anders-seitigen Gleitabschnitt (52B; 152B), der in Bezug auf die andere Oberflächenseite der Platte (30; 130) gleitfähig ist, und einen Kopplungsabschnitt (52C; 152C), der im Wesentlichen in der Öffnung (31; 131) angeordnet ist und den einseitigen Gleitabschnitt (52A; 152A) und den anders-seitigen Gleitabschnitt (52B; 152B) koppelt.

11. Ein Verfahren nach Anspruch 10, wobei das sekundäre Gießharz in einem Kühlungsprozess nach dem sekundären Formen zur Öffnung (31; 131) hin schrumpft, wobei der Zwischenraum (C) zwischen einer inneren Fläche (31A; 131A) der Öffnung (31; 131) und dem Kopplungsabschnitt (52C; 152C) gebildet wird.

12. Ein Verfahren nach Anspruch 10 oder 11, wobei ein Dichtungsmontageabschnitt (54), der zumindest teilweise aus Kunstharz besteht, im Umfangsbereich auf einem Teil einer Fläche der Platte (30; 130) bereitgestellt wird, der dem Gehäuse der Vorrichtung zugewandt sein wird, radial außerhalb des Befestigungsabschnitts (52; 152).

13. Ein Verfahren nach irgendeinem der vorhergehenden Ansprüche 10 bis 12, wobei die Platte (30; 130) eine Metallplatte (30; 130) ist und wobei eine Plattierung auf die Oberflächen der Metallplatte (30; 130) aufgebracht wird.

## Revendications

1. Un connecteur de dispositif qui est à attacher à un boîtier d'un dispositif, comprenant :
une plaque (30 ; 130) constituée d'un matériau en plaque comme matériau de base, formée avec une ouverture (31 ; 131) pénétrant dans une direction d'épaisseur de plaque (TD) du matériau en plaque, et à attacher et à fixer au boîtier du dispositif ;
un boîtier de connecteur (50 ; 150) constitué de résine synthétique et fixé à la plaque (30 ; 130), sachant que le boîtier de connecteur (50 ; 150) est fixé à la plaque (30 ; 130) par moulage; et
au moins un raccord de borne (10 ; 110) maintenu dans le boîtier de connecteur (50 ; 150) tout en pénétrant à travers l'ouverture (31 ; 131) ;
sachant que :
le boîtier de connecteur (50 ; 150) inclut une portion de fixation (52 ; 152) qui couvre au moins partiellement une portion de bord d'ouverture de l'ouverture (31 ; 131) tout en exposant une portion de bord périphérique de la plaque (30 ; 130) ; et que
la portion de fixation (52 ; 152) inclut une portion de coulissement sur un côté (52A, 152A) pouvant coulisser par rapport à un côté de surface de la plaque (30 ; 130), une portion de coulissement sur l'autre côté (52B, 152B) pouvant coulisser par rapport à l'autre côté de surface de la plaque (30 ; 130) et une portion de couplage (52C ; 152C) agencée essentiellement dans l'ouverture (31 ; 131) et couplant la portion de coulissement sur un côté (52A, 152A) avec la portion de coulissement sur l'autre côté (52B, 152B), **caractérisé en ce que** :
la plaque (30 ; 130) est une plaque (30 ; 130) métallique, constituée d'un matériau métallique en plaque comme matériau de base, et **en ce que** :
un espace libre (C) est formé entre la portion de couplage (52C ; 152C) et la surface intérieure de l'ouverture (31 ; 131) faisant face à la portion de couplage (52C ; 152C) dans un état, dans lequel le boîtier de connecteur (50 ; 150) moulé est refroidi à une température normale.

2. Un connecteur de dispositif d'après la revendication 1, sachant qu'une portion de montage de scellement (54) constituée de résine synthétique au moins partiellement est fournie de manière circonférentielle sur une partie d'une surface de la plaque (30 ; 130) qui fera face au boîtier du dispositif, radialement vers l'extérieur de la portion de fixation (52 ; 152) ; et que
le boîtier du dispositif et la portion de montage de scellement (54) sont fixés dans un état scellé au moyen d'une garniture (*packing*) (80 ; 180).

3. Un connecteur de dispositif d'après la revendication 2, sachant qu'une pluralité de lèvres annulaires (81 ; 181) sont fournies sur une surface de scellement de la garniture (80 ; 180) à la portion de montage de scellement (54).

4. Un connecteur de dispositif d'après une quelconque des revendications précédentes, sachant qu'un revêtement métallique est appliqué aux surfaces de la plaque métallique (30 ; 130).

5. Un connecteur de dispositif d'après une quelconque des revendications précédentes, sachant qu'une parmi la portion de coulissement sur un côté (52A, 152A) et la portion de coulissement sur l'autre côté (52B, 152B) est constituée pour saillir plus vers l'extérieur que l'autre parmi la portion de coulissement sur un côté (52A, 152A) et la portion de coulissement sur l'autre côté (52B, 152B).

6. Un connecteur de dispositif d'après une quelconque des revendications précédentes, sachant que le raccord de borne (10 ; 110) se présente sous forme de plaque conductrice (10 ; 110) incluant une portion principale de borne (11), une portion d'attache côté fil (12) fournie à une extrémité de la portion principale de borne (11), en s'étendant notamment sous un angle différant de 0° et de 180°, de préférence essentiellement de manière perpendiculaire par rapport à la portion principale de borne (11), et une portion d'attache côté dispositif (13) fournie à l'autre extrémité de la portion principale de borne (11).

7. Un connecteur de dispositif d'après une quelconque des revendications précédentes, sachant que le boîtier de connecteur (50 ; 150) comprend une première portion de connexion (51 ; 151) à connecter à un connecteur et une deuxième portion de connexion (53 ; 153) agencée dans l'ouverture (31 ; 131) et à connecter avec le dispositif.

8. Un connecteur de dispositif d'après la revendication 7, sachant qu'une portion épaisse (57 ; 157) présentant une couche épaisse de résine est formée à partir d'une portion de la première portion de connexion (51 ; 151) jusqu'à une portion de la deuxième portion de connexion (53 ; 153).

9. Un connecteur de dispositif d'après la revendication 8, sachant que le raccord de borne (10 ; 110) est agencé pour pénétrer à travers l'ouverture (31 ; 131) de la plaque (30 ; 130) dans la portion épaisse (57 ; 157).

10. Un procédé pour produire un connecteur de dispositif qui est à attacher à un boîtier d'un dispositif, comprenant le fait de :
mettre au moins un raccord de borne (10 ; 110) dans une matrice de moulage primaire,
serrer la matrice et
injecter de la résine de moulage primaire pour former au moins un type de noyau (20) ;
ensuite
mettre une plaque (30 ; 130) constituée d'un matériau en plaque comme matériau de base, formée avec une ouverture (31 ; 131) pénétrant dans une direction d'épaisseur de plaque (TD) du matériau en plaque, et le noyau constitué (20) au moins partiellement disposé à l'intérieur de l'ouverture (31 ; 131) dans une matrice de moulage secondaire,
serrer la matrice et
injecter une résine de moulage secondaire pour former un boîtier de connecteur (50 ; 150) constitué de résine synthétique et fixé à la plaque (30 ; 130), sachant que le boîtier de connecteur (50 ; 150) est formé pour inclure une portion de fixation (52 ; 152) qui couvre au moins partiellement une portion de bord d'ouverture de l'ouverture (31 ; 131) tout en exposant une portion de bord périphérique de la plaque (30 ; 130) ; et sachant que la portion de fixation (52 ; 152) est formée pour inclure une portion de coulissement sur un côté (52A, 152A) pouvant coulisser par rapport à un côté de surface de la plaque (30 ; 130), une portion de coulissement sur l'autre côté (52B, 152B) pouvant coulisser par rapport à l'autre côté de surface de la plaque (30 ; 130) et une portion de couplage (52C ; 152C) agencée essentiellement dans l'ouverture (31 ; 131) et couplant la portion de coulissement sur un côté (52A, 152A) avec la portion de coulissement sur l'autre côté (52B, 152B).

11. Un procédé d'après la revendication 10, sachant que la résine de moulage secondaire rétrécit en direction de l'ouverture (31 ; 131) dans un processus de refroidissement à la suite du moulage secondaire, moyennant la formation de l'espace libre (C) entre une surface intérieure (31A, 131A) de l'ouverture (31 ; 131) et la portion de couplage (52C ; 152C).

12. Un procédé d'après la revendication 10 ou 11, sachant qu'une portion de montage de scellement (54) constituée de résine synthétique au moins partiellement est fournie de manière circonférentielle sur une partie d'une surface de la plaque (30 ; 130) qui fera face au boîtier du dispositif, radialement vers l'extérieur de la portion de fixation (52 ; 152).

13. Un procédé d'après une quelconque des revendications précédentes de 10 à 12, sachant que la plaque (30 ; 130) est une plaque (30 ; 130) métallique et qu'un revêtement métallique est appliqué aux surfaces de la plaque métallique (30 ; 130).
